# EUROPÄISCHE PATENTSCHRIFT

(11) **EP 2 699 871 B1**
(45) Veröffentlichungstag und Bekanntmachung des Hinweises auf die Patenterteilung: **28.01.2015**
(21) Anmeldenummer: 12713065.6
(22) Anmeldetag: 28.03.2012
(51) Int. Cl.: F42C 17/04, F42C 11/06, F42C 11/00, G01P 3/66

(54) **VORRICHTUNG UND VERFAHREN ZUR PROGRAMMIERUNG EINES GESCHOSSES**
DEVICE AND METHOD FOR PROGRAMMING A PROJECTILE
DISPOSITIF ET PROCÉDÉ DE PROGRAMMATION D'UN MISSILE

(30) Priorität: 19.04.2011 DE 102011018248
(43) Veröffentlichungstag der Anmeldung: 26.02.2014
(73) Patentinhaber: Rheinmetall Air Defence AG, 8050 Zürich (CH)
(72) Erfinder: MÜLLER, Kurt, CH-8046 Zürich (CH); ALBERTI, Aldo, CH-8404 Winterthur (CH)
(74) Vertreter: Dietrich, Barbara
(86) Internationale Anmeldenummer: PCT/EP2012/055531
(87) Internationale Veröffentlichungsnummer: WO 2012/143218

(56) Entgegenhaltungen:
- EP-A1- 0 467 055
- EP-A1- 0 802 390
- DE-C1- 3 637 093
- US-A- 4 686 885

## Beschreibung

Die Erfindung beschäftigt sich mit einer Vorrichtung zur Messung elektromagnetischer Felder an und / oder innerhalb einer Programmiereinrichtung, die an der Mündung einer Rohrwaffe eingebunden ist, insbesondere mit einer Messvorrichtung an einer Programmiereinrichtung für Air Burst Munition (ABM), also mit einem Feldprüfgerät einer Mess- und Programmierbasis. Mit der Messvorrichtung können Felder bzw. Signale der Programmierspule gemessen werden, wodurch die korrekte Funktion der Programmierspule, das Programmiersignal sowie die zeitliche Korrelation zum Geschoss und auch die Programmierung eines Geschosses selbst überprüft werden. In besonderen Fällen können diese Werte dann bei der Programmierung des Geschosses berücksichtigt werden.

Unter dem Begriff einer Rohrwaffe sollen im Rahmen der vorliegenden Beschreibung sowohl Geschütze wie auch Raketenabschussrohre verstanden werden. Unter dem Begriff eines Projektils sollen alle Flugkörper verstanden werden, die aus einem Waffenrohr abschiessbar sind, also ballistische Projektile und Projektile mit mindestens teilweisem Selbstantrieb. Als ballistische Projektile werden übliche herkömmliche Geschosse, die beim Aufprall detonieren, wie auch tempierbare bzw. programmierbare Geschosse, die zum Beispiel im Flug detonieren, verstanden. Die Projektile können drall- und/oder pfeilstabilisiert sein, sie können beispielsweise als Treibspiegelgeschosse, als Primärgeschosse, weiche mehrere Sekundärgeschosse mit sich führen, oder als Übungsgeschosse mit Kern und Mantel ausgebildet sein.

Die Mündungsgeschwindigkeit eines Projektils wird im Schiesswesen üblicherweise mit V₀ bezeichnet und auch V₀-Geschwindigkeit genannt. Es handelt sich hierbei um diejenige Geschwindigkeit, mit der sich ein von einer Rohrwaffe abgeschossenes Projektil beim Austritt aus dem Waffenrohr relativ zum Waffenrohr auf seiner Trajektorie bewegt. Von der V₀-Geschwindigkeit sind unter anderem die Flugdauer, die Schussdistanz und die Treffpunktlage abhängig. Die genaue Kenntnis der Mündungsgeschwindigkeit V₀ ist aber insbesondere im Zusammenhang mit programmierbaren Projektilen wichtig, da der Zeitpunkt der Übertragung eines Programmiercodes an ein Projektil zwecks Erreichung der gewünschten Waffenwirkung von der Mündungsgeschwindigkeit V₀ abhängt. Die Mündungsgeschwindigkeit V₀ hängt auch vom Gewicht und der Temperatur der Treibladung ab.

Eine theoretische Mündungsgeschwindigkeit V₀(theor.) lässt sich rechnerisch ermitteln, wenn alle relevanten Daten, welche die Waffe bzw. das Waffenrohr und das abzuschiessende Projektil betreffen, bekannt sind. Die Mündungsgeschwindigkeit V₀ weicht jedoch von der theoretisch berechneten Mündungsgeschwindigkeit V₀(theor.) ab. Auch verringert sich die V₀-Geschwindigkeit als Folge der Abnutzung des Waffenrohres. Es wird daher bevorzugt beim Schiessen jeweils die tatsächliche Mündungsgeschwindigkeit gemessen, um im Hinblick auf das zu bekämpfende Ziel ggf. Azimut und Elevation des Waffenrohres zu korrigieren und/oder um die Programmierung des Projektils oder mindestens der nachfolgenden Projektile entsprechend durchzuführen.

Air Burst Munition (ABM) ist ein Munitionstyp, der sich in der Flugphase zerlegt, ohne dass ein Auftreffen auf ein Zielobjekt bzw. eine Annäherung an ein Zielobjekt notwendig wäre. Dazu wird durch einen geeigneten Mechanismus eine Zerlegeladung innerhalb dieser Munition gezündet und zur Explosion gebracht. Ist die Mündungsgeschwindigkeit der ABM hinreichend genau bekannt, kann über eine Angabe einer Zeit, nach der die Zerlegungsladung nach Verlassen der Mündung zünden soll, die gewünschte Entfernung bestimmt werden. Aufgrund der natürlichen Streuung der Mündungsgeschwindigkeiten von ABM ist es für diesen Munitionstyp von besonderer Bedeutung, die Austrittsgeschwindigkeit an der Mündung (V₀) mit hinreichender Genauigkeit zu bestimmen.

Zur Messung der tatsächlichen V₀-Geschwindigkeit sind verschiedene Vorrichtungen und Verfahren bekannt. Häufig basiert die Messung der V₀-Geschwindigkeit auf einem Schrankenprinzip. Eine solche V₀-Messung ist aus der EP 0 108 973 B1 bekannt. Hier werden zwei Spulen benutzt, die in einem bekannten gegenseitigen Abstand angeordnet sind, und zwar in Flugrichtung des Projektils gesehen nach dem Austrittsquerschnitt des Waffenrohres. Diese Spulen bzw. ihr gegenseitiger Abstand bilden eine Messbasisstrecke. Die Spulen sind im Allgemeinen mindestens annähernd konzentrisch zur Längsachse des Waffenrohres angeordnet, und ihr Innendurchmesser ist etwas grösser als das Kaliber des Waffenrohres. Die Spulen liegen an Stromquellen, sodass sich im Bereich jeder Spule ein Magnetfeld ergibt und bei Durchtritt des Projektils eine induzierte Spannung abgreifbar ist. Während ein Projektil den Bereich der Spulen durchfliegt, wird das Magnetfeld gestört, und die abgreifbare Spannung ändert sich in Funktion der Relativlage des Projektils zur Spule. Gleiche Thematik umfasst die CH 691 143 A5.

Wird also die V₀ des einzelnen Projektils an der Mündung des Geschützes bestimmt, so kann dem Projektil nach Berechnung der entsprechenden Zerlegezeit dieser Wert über eine bezüglich der Projektilflugbahn nachgelagerte Programmiereinheit einprogrammiert werden, woraufhin das Projektil am gewünschten Ort durch die Zerlegeladung zerlegt wird. Ein derartiges System ist beispielsweise bekannt aus EP 0 802 390 A1, EP 0 802 392 A1 und EP 0 802 391 A1. Dabei durchtritt das Projektil im Bereich der Mündung eine Messstrecke, welche durch zwei hintereinander angeordnete Spulen gebildet wird, und erzeugt in diesen jeweils ein zeitabhängiges Spannungssignal. Bei bekanntem Spulenabstand kann aus diesen Signalen die Projektilgeschwindigkeit bestimmt werden. In einer Recheneinheit wird die entsprechende Zerlegungszeit berechnet und in über eine dritte Spule dem Projektil aufprogrammiert.

EP 0 467 055 A1 offenbart eine Vorrichtung und ein Verfahren zur Programmierung eines programmierbaren Geschosses im Mündungsbereich einer Rohrwaffe mit wenigstens einer Programmierspule.

US 4 686 885 A und DE 36 37 093 C1 offenbaren das Überprüfen einer Programmierung im Rahmen von Vorrichtungen und Verfahren zur induktiven Programmierung von Geschossen. Dabei handelt es sich um das Zurücksenden der empfangenen Programmierdaten durch das Geschoss an die Programmiervorrichtung, die die Daten mittels separatem Empfänger (US 4 686 885 A) oder mittels der Sendespule (DE 36 37 093 C1) empfängt und auswertet.

Um den Zeitzünder zur Zerlegung des Geschosses mit der gewünschten Genauigkeit einstellen zu können, ist es nach der Lehre der EP 0 467 055 A1 notwendig, von der Sendespule der Programmiereinrichtung auf die Empfangsspule des Geschosses mindestens 12 Bit zu übertragen. Bei einer Mündungsgeschwindigkeit von beispielsweise über 1'200 m/sec erfolgt der Durchtritt der Empfangsspule des Geschosses durch die an der Waffenrohrmündung befestigte Sendespule in relativ kurzer Zeit, sodass nur wenig Zeit zur Übertragung der Information von der Sendespule auf die Empfangsspule zur Verfügung steht. Gleichzeitig muss das Zeitfenster der Übertragung so gewählt werden, dass das Geschoss sich dabei innerhalb der Sendespule befindet.

Der Erfindung liegt die Aufgabe zugrunde, eine Vorrichtung zu schaffen, mit deren Hilfe während einer Schussabgabe eine genaue Programmierung erfolgen kann.

Gelöst wird die Aufgabe durch die Merkmale des Patentanspruchs 1. Vorteilhafte Ausgestaltungen widerspiegeln sich in den Unteransprüchen. Ein Verfahren wird durch die Merkmale des Patentanspruchs 9 angegeben.

Der Erfindung liegt die Idee zugrunde, die korrekte Funktion der Programmierspule, das Programmiersignal sowie die zeitliche Korrelation zum Geschoss und auch die Programmierung eines Geschosses selbst zu überprüfen. Das kann durch Erfassung der Felder bzw. Signale der Programmierspule erfolgen. Diese Information kann dann bei der Programmierung berücksichtigt werden. Mit der erfindungsgemässen Messvorrichtung können zudem auch Störfelder aus weiteren Komponenten der Rohrwaffe detektiert werden sowie Störfelder, die von aussen, die auf die Rohrwaffe einwirken. Zudem ist eine Überprüfung aktiver Einstrahlung aus z.B. Natel, Radar, aktive Störeinrichtungen sowie Umschaltstörer möglich. Das sind weitere Einflüsse, die nunmehr bei einer Programmierung berücksichtigt werden können. - Zwar sind Prüfeinrichtungen, die Felder bzw. Signale einer Programmierspule erfassen können, z.B. unter dem Begriff > Basenprüfgerät < bereits bekannt, diese sind jedoch auf Laborumgebungen beschränkt, d.h. mit ihnen wird keine Vermessung der Situation eines realen Schusses und der damit verbundenen möglichen Korrektur erzielt.

Für die Umsetzung der Idee ist im Bereich einer vorhandenen Programmiereinrichtung, im Bereich der Mündung einer Rohrwaffe und bevorzugt sogar an der Programmierspule für die Munition selbst, eine zusätzliche, von der Programmierspule unabhängige Messvorrichtung vorgesehen, die die im Bereich der Programmierspule vorhandenen, und insbesondere die von der Programmierspule emittierten Signale detektieren und einer Messauswerteinrichtung überführen kann. Das System ist als rein passives System ausgelegt.

Diese Messvorrichtung kann im einfachsten Fall aus einer Spule mit einer oder mehreren Windungen um die Mündungsöffnung der Rohrwaffe herum bestehen. Die Spule ist mit einer grundsätzlich bekannten Signalaufnahme- und Signalverarbeitungseinrichtung funktionell verbunden, z.B. durch eine Drahtverbindung.

Die Spule ist bevorzugt so platziert, dass sie einerseits die lichte Öffnung der Rohrmündung nicht abdeckt, gleichzeitig aber noch die aus der Programmierspule mit geringer Feldstärke austretenden / hervorquellenden Felder ausreichend gut detektieren kann. Dazu muss sie ausserhalb der metallischen Abschirmung der Programmierspule positioniert sein.

Die Anzahl der Spulenwindungen kann eine oder mehrere betragen. Da die Anzahl der Windungen die Ansprechzeit der Spule beeinflusst, ist eine Auswahl der Windungen anhand der Flankensteilheit des zu detektierenden Signals vorzunehmen. Das schnellste Ansprechverhalten wird bei einer einzigen Spulenwicklung erreicht. Bessere Signalsensitivitäten ergeben sich bei mehreren Wicklungen - hier ist jeweils die beste Lösung je nach Signalstärke und Steilheit zu wählen. Die Wicklungen können entweder als Draht in einer umgebenden Struktur dargestellt werden. Alternativ und besonders bevorzugt ist eine Realisierung als gedruckte Leiterplatte ("Print").

Für das Umfassungsmaterial der Spule ist ein elektrisch nicht leitendes Material vorzusehen, z.B. nicht-leitende Kunststoffe oder Epoxidmaterialien. Gleichzeitig ist es vorteilhaft, wenn dieses Material von geringer Dichte ist und damit nur eine geringe zusätzliche Masse im Bereich der Mündung bedeutet, da bekanntermassen zusätzliche Massen im Mündungsbereich das dynamische und statische Verhalten der Rohrwaffe beeinflussen.

Die Befestigung der Messvorrichtung an der Baugruppe der Programmierspule kann erfolgen über eine Klebeverbindung, eine Pressverbindung oder auch als gedruckte Ausführung auf einer Oberfläche. Die Gestaltung der Positionierung ist in vielen Varianten möglich.

Damit ergeben sich unter anderem die weiteren Vorteile einer guten Signalauswertbarkeit: Bit-Muster und eventuelle Unterbrüche, Signalstärke, Abschwächungen und der einer Bit-Prüfungen, d.h., ob richtige Bits gesetzt wurden. Zudem wird die Prüfung des Zeitfensters / Zeitpunkt der Programmierung (innert 20 mu-sec) und die Prüfung der Programmierbasis im Echtschuss möglich. Auch kann ein unabhängiger Funktions- und Qualitätstest der Programmierbasis vorgenommen werden. Es dient als Schiedsrichtertool für Nivz (nicht-Zerlegung im vorgesehenen Zielgebiet): > Ursache bei Programmierspule oder bei Munition?< und der Dokumentation der Basiseigenschaften beim Abnahmeschießen.

Vorgeschlagen wird eine Messvorrichtung, die an einer Mess- und Programmierbasis für die Programmierung eines Geschoss (13) eingebunden ist, die die zumindest aus einer Programmierspule austretenden / hervorquellenden Felder und / oder Signale detektieren kann. In einer Auswerteeinrichtung werden diese "detektierten" Werte ausgewertet und können dann auch der Programmierung des Geschosses zur Verfügung gestellt werden. Damit sind nicht nur Entscheidungen über die Arbeitsweise der Programmierspule als solche möglich, es können auch Korrekturen vorgenommen werden, wenn dieses elektronisch möglich ist.

Anhand eines Ausführungsbeispiels mit Zeichnung soll die Erfindung näher erläutert werden. Es zeigt:
- Fig. 1: einen Längsschnitt durch eine Mess- und Programmiereinrichtung nach dem Stand der Technik,
- Fig. 2: eine Schnittdarstellung einer ersten Ausführungsform einer Messvorrichtung zur Messung des Feldes bzw. der Signale zumindest der Spule der Programmiereinrichtung,
- Fig. 3: eine Schnittdarstellung einer zweiten Ausführungsform,
- Fig. 4: eine Schnittdarstellung einer dritten Ausführungsform,
- Fig. 5: eine Schnittdarstellung einer weiteren Ausführungsform.

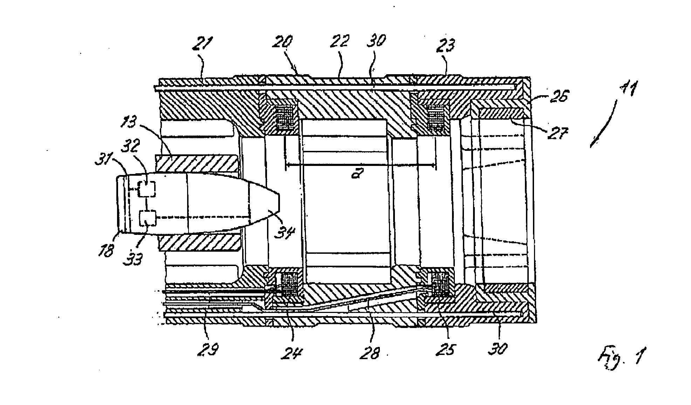

Fig. 1 zeigt ein nach dem Stand der Technik an der Mündung eines Geschützrohres 13 befestigtes Tragrohr 20, das aus drei Teilen 21, 22, 23 besteht. Zwischen dem ersten Teil 21 und dem zweiten bzw. dritten Teil 22, 23 sind Ringspulen 24, 25 für die Messung der Geschossgeschwindigkeit angeordnet. Am dritten Teil 23 - auch Programmierteil genannt - ist eine in einem Spulenkörper 26 gehaltene Sendespule 27 befestigt. Für die Speisung der Ringspulen sind Leitungen 28, 29 vorgesehen. Am Umfang des Tragrohres 20 sind zwecks Abschirmung von die Messung störenden Magnetfeldern Weicheisenstabe 30 angeordnet. Das Geschoss 18 weist eine Empfangsspule 31 auf, die über ein Filter 32 und einen Zähler 33 mit einem Zeitzünder 34 verbunden ist. Beim Durchgangs des Geschosses 18 durch die beiden Ringspulen 24, 25, wird kurz hintereinander in jeder Ringspule ein Impuls erzeugt. Diese Impulse werden einer Auswerteschaltung (nicht dargestellt) zugeführt, in welcher aus dem zeitlichen Abstand der Impulse und einem Abstand a zwischen den Ringspulen 24, 25 die Geschossgeschwindigkeit errechnet wird. Unter Berücksichtigung der Geschossgeschwindigkeit wird eine Zerlegungszeit errechnet, die in geeigneter Form beim Durchgang des Geschosses 18 durch die Sendespule 27 zum Zwecke der Einstellung des Zählers 32 etc. induktiv auf die Empfangsspule 31 übertragen wird.

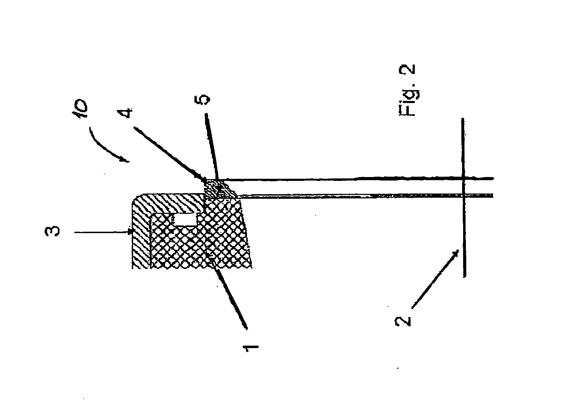

Fig. 2 beschreibt die erfindungsgemässe Vorrichtung 10 in einer ersten Ausführungsform. Dabei stellt diese Schnittzeichnung die Mündung 11 der Rohrwaffe dar, welche von einem Bauteil 1 gebildet wird, welches sich um die Rohrmittenachse 2 zirkular erstreckt. Innerhalb eines elektrisch nicht leitenden Befestigungsrings 4 ist wenigstens eine Wicklung 5 der Messvorrichtung 10 eingelassen. Der Ring 4 wird auf die Stirnfläche der Rohrwaffenmündung bevorzugt aufgeklebt und isoliert dabei die Wicklung 5 von der elektrisch leitenden Abschlusskappe 3 an der Rohrwaffe.

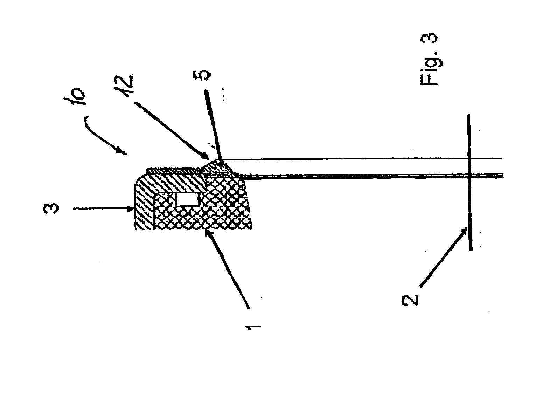

Fig. 3 beschreibt die erfindungsgemässe Vorrichtung 10 in einer zweiten Ausführungsform.

Dabei stellt diese Schnittzeichnung die Mündung 11 der Rohrwaffe dar, welche von dem Bauteil 1 gebildet wird, welches sich um die Rohrmittenachse 2 zirkular erstreckt. Innerhalb eines elektrisch nicht leitenden Befestigungsrings 12 ist wenigsten eine Wicklung 5 der Messvorrichtung 10 eingelassen. Der Ring 12 ist mit einer vergrösserten Fläche ausgestattet, um die Klebeverbindung auf Bauteil 1 und Abschlusskappe 3 an der Rohrwaffe zu verbessern.

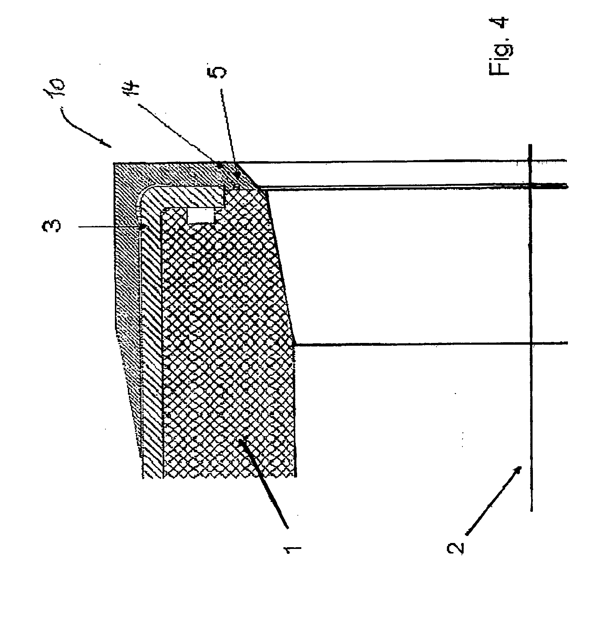

Fig. 4 beschreibt die erfindungsgemässe Vorrichtung in einer dritten Ausführungsform. Hierbei ist der Befestigungsring 14 als Kappe ausgebildet, welche über die Mündung 10 der Rohrwaffe übergestülpt werden kann. Dadurch verbessert sich der mechanische Halt der erfindungsgemässen Messvorrichtung 5 auf der Rohrwaffe noch einmal gegenüber den vorhergehenden Ausführungsformen.

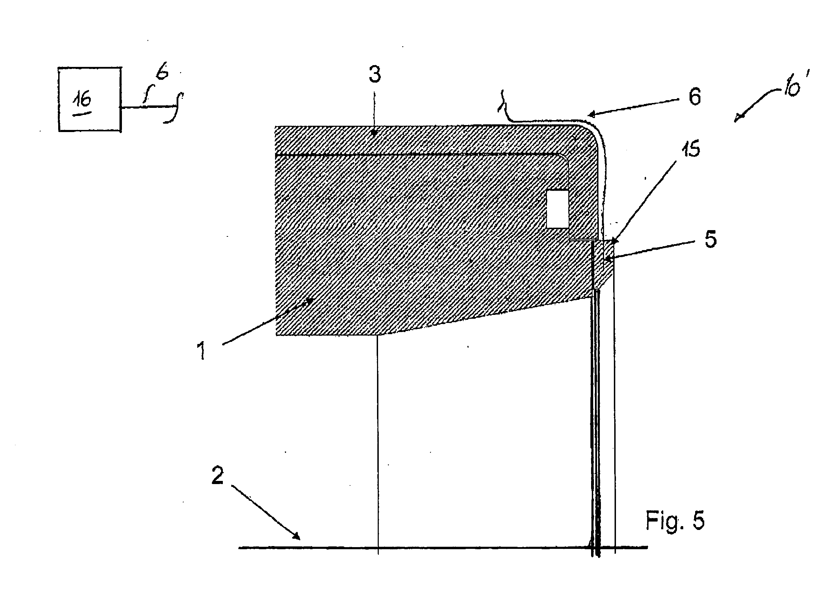

Fig. 5 beschreibt die erfindungsgemässe Vorrichtung in einer vierten, besonders bevorzugten Ausführungsform. Hierbei ist innerhalb des Befestigungsrings 15 eine Leiterbahn 5' in der Form einer kreisförmigen Spulenwicklung als gedruckte Schaltung ausgeführt, wobei elektrische Anschlussmittel 6 aus dem Befestigungsring 15 herausgeführt werden und in Wirkverbindung mit einer Auswerteinrichtung 16 gebracht werden.

Mit Hilfe der zusätzlichen Messvorrichtung 10, die bevorzugt im Bereich der Programmierspule 27 eingebunden ist, werden die emittierten Signale der Sende- bzw. Programmierspule 27 detektiert und an die Auswerteinrichtung 16 geben. Das / die Ergebnis(se) können dann auch in die Programmierung des Geschosses 13 (Korrektur) mit eingehen. Auf jeden Fall lassen sich Informationen über die Funktionsweise der Programmierspule 27 ableiten.

Es versteht sich, dass dieses Prinzip auch zur Überprüfung der Messspulen 24, 25 Anwendung finden kann, wenngleich hier der konstruktive Aufwand sicherlich größer ist, als der für die Überprüfung der Programmierspule 27.

## Patentansprüche

1. Vorrichtung zur Programmierung eines programmierbaren Geschosses (13) im Mündungsbereich einer Rohrwaffe mit wenigstens einer Programmierspule (27), **dadurch gekennzeichnet, dass** eine Messvorrichtung (10, 10') eingebunden ist, die die aus der Programmierspule (27) austretenden / hervorquellenden Felder und / oder Signale detektiert, und mit einer Auswerteeinrichtung (11) elektrisch verbunden ist, die diese detektierten Werte auswertet.

2. Vorrichtung nach Anspruch 1, **dadurch gekennzeichnet, dass** die detektierten Werte auch als Korrekturwerte der Programmierung des Geschosses (13) zur Verfügung gestellt werden können.

3. Vorrichtung nach Anspruch 1 oder 2, **dadurch gekennzeichnet, dass** die Messvorrichtung (10) aus einer Spule (5) mit einer oder mehreren Windungen um die Mündungsöffnung (11) der Rohrwaffe herum besteht.

4. Vorrichtung nach Anspruch 1 oder 2, **dadurch gekennzeichnet, dass** die Messvorrichtung (10') als eine Leiterbahn (5') in der Form einer kreisförmigen Spulenwicklung als gedruckte Schaltung ausgeführt ist.

5. Vorrichtung nach einem der Ansprüche 1 bis 4, **dadurch gekennzeichnet, dass** die Messvorrichtung (10. 10') bevorzugt so platziert ist, dass sie einerseits die lichte Öffnung der Rohrmündung nicht abdeckt.

6. Vorrichtung nach einem der Ansprüche 1 bis 5, **dadurch gekennzeichnet, dass** die Messvorrichtung (10) in einem Befestigungsring (4, 12, 14, 15) eingebunden ist, der auf die Stirnfläche der Rohrwaffenmündung bevorzugt aufgeklebt werden kann.

7. Vorrichtung nach Anspruch 6, **dadurch gekennzeichnet, dass** der Befestigungsring (12) mit einer vergrösserten Fläche ausgestattet ist.

8. Vorrichtung nach Anspruch 6, **dadurch gekennzeichnet, dass** der Befestigungsring (14, 15) als Kappe ausgebildet ist.

9. Verfahren zur Programmierung eines programmierbaren Geschosses (13) im Mündungsbereich einer Rohrwaffe mit wenigstens einer Programmierspule (27), **dadurch gekennzeichnet, dass** eine Messvorrichtung (10, 10') die aus der Programmierspule (27) austretenden / hervorquellenden Felder und / oder Signale detektiert, die dann in einer Auswerteeinrichtung (11) ausgewertet werden.

## Claims

1. Device for programming a programmable projectile (13) in the region of the muzzle of a barrelled weapon with at least one programming coil (27), **characterized in that** a measuring device (10, 10'), which detects the fields and/or signals emerging/originating from the programming coil (27), is incorporated and is electrically connected to an evaluation device (11), which evaluates these detected values.

2. Device according to Claim 1, **characterized in that** the detected values can also be made available for the programming of the projectile (13) as correction values.

3. Device according to Claim 1 or 2, **characterized in that** the measuring device (10) consists of a coil (5) with one or more turns around the muzzle opening (11) of the barrelled weapon.

4. Device according to Claim 1 or 2, **characterized in that** the measuring device (10') is configured as a conductor track (5') in the form of a circular coil winding as a printed circuit.

5. Device according to one of Claims 1 to 4, **characterized in that** the measuring device (10, 10') is placed with preference in such a way that it does not cover the clear opening of the barrel muzzle on one side.

6. Device according to one of Claims 1 to 5, **characterized in that** the measuring device (10) is incorporated in a fastening ring (4, 12, 14, 15), which can be adhesively attached with preference to the end face of the muzzle of the barrelled weapon.

7. Device according to Claim 6, **characterized in that** the fastening ring (12) is provided with an enlarged surface area.

8. Device according to Claim 6, **characterized in that** the fastening ring (14, 15) is formed as a cap.

9. Method for programming a programmable projectile (13) in the region of the muzzle of a barrelled weapon with at least one programming coil (27), **characterized in that** a measuring device (10, 10') detects the fields and/or signals emerging/originating from the programming coil (27), which are then evaluated in an evaluation device (11) .

## Revendications

1. Dispositif de programmation d'un projectile (13) programmable dans la zone de la bouche d'une arme à feu comprenant au moins une bobine de programmation (27), **caractérisé en ce qu'**un dispositif de mesure (10, 10') est intégré, lequel détecte les champs et/ou les signaux provenant/émanant de la bobine de programmation (27), et est relié électriquement avec un dispositif d'interprétation (11) qui interprète ces valeurs détectées.

2. Dispositif selon la revendication 1, **caractérisé en ce que** les valeurs détectées peuvent également être mises à disposition sous la forme de valeurs de correction de la programmation du projectile (13) .

3. Dispositif selon la revendication 1 ou 2, **caractérisé en ce que** le dispositif de mesure (10) se compose d'une bobine (5) dotée d'un ou plusieurs enroulements autour de l'ouverture de la bouche (11) de l'arme à feu.

4. Dispositif selon la revendication 1 ou 2, **caractérisé en ce que** le dispositif de mesure (10') est réalisé sous la forme d'une piste conductrice (5') ayant la forme d'un enroulement de bobine circulaire sous la forme d'un circuit imprimé.

5. Dispositif selon l'une des revendications 1 à 4, **caractérisé en ce que** le dispositif de mesure (10, 10') est de préférence positionné de telle sorte qu'il ne recouvre pas d'un côté l'ouverture libre de la bouche du canon.

6. Dispositif selon l'une des revendications 1 à 5, **caractérisé en ce que** le dispositif de mesure (10) est intégré dans une bague de fixation (4, 12, 14, 15) qui peut être de préférence collée sur la face frontale de la bouche de l'arme à feu.

7. Dispositif selon la revendication 6, **caractérisé en ce que** la bague de fixation (12) est dotée d'une surface agrandie.

8. Dispositif selon la revendication 6, **caractérisé en ce que** la bague de fixation (14, 15) est réalisée sous la forme d'un capuchon.

9. Procédé de programmation d'un projectile (13) programmable dans la zone de la bouche d'une arme à feu comprenant au moins une bobine de programmation (27), **caractérisé en ce qu'**un dispositif de mesure (10, 10') détecte les champs et/ou les signaux provenant/émanant de la bobine de programmation (27), lesquels sont ensuite interprétés dans un dispositif d'interprétation (11) .
